# EUROPEAN PATENT APPLICATION

(11) **EP 3 189 724 A1**
(43) Date of publication of application: **12.07.2017**
(21) Application number: 15837882.8
(22) Date of filing: 03.09.2015
(51) Int. Cl.: A01G 7/06

(54) **INJECTION APPLIANCE FOR ENDOTHERAPY TREATMENTS FOR PLANTS**

(30) Priority: 04.09.2014 ES 201431287 P
(71) Applicant: Endoterapia Vegetal, S.L., 17486 Castellò D'Empùries (Girona) (ES)
(72) Inventor: BARONAT ESPARRAGUERA, Llorenç, E-28037 Madrid (ES); OLIVET BONMATÍ, Lluís, 17486 Castellò D'Empùries (Girona) (ES); DE PALOL MASDEVALL, Jaume, 17486 Castellò D'Empùries (Girona) (ES)
(74) Representative: Intès, Didier Gérard André
(86) International application number: PCT/ES2015/070648
(87) International publication number: WO 2016/034756

(57) **Abstract**

Injection equipment for endotherapy treatments in plants, comprising a product-containing tank (1) that hydraulically connects to a pumping device (2) which in turn hydraulically and electrically connects to a control unit (3) that in turn hydraulically connects to an injection element (4), the control unit (3) incorporating a transducer arranged in relation to a conduit that connects to the hydraulic connections of said control unit (3) with the pumping device (2) and with the injection element (4), said transducer (22) being connected to the electric connection between the control unit (3) and the pumping device (2), such that it enables the operations of the equipment to be controlled depending on the pressure of the product that is injected during the application treatments.

## Description

### Technical field

The present invention is related to the therapeutic treatment of plants, particularly those that have a compact and resistant trunk, such as trees and palm trees, proposing injection equipment for liquid therapeutic products in said plant trunks, which enables the application of treatments through the method known as endotherapy, in conditions of optimal effectiveness for the absorption of the therapeutic liquid by the plants.

### State of the art

There are several known application methods of therapeutic products for the therapeutic treatment of plants, such as by fumigation, for example, so that the product is absorbed through the leaves, or by application in the ground, directly or mixed with the irrigation water, so that the product is absorbed through the roots.

These treatments can be effectively applied for any kind of plant, but they have the disadvantage that the application is poorly controlled, since the effectiveness depends on meteorological factors, such as rain or wind, that can disperse the therapeutic product, causing it to be partially absorbed, even in small percentages, by the plants for which they are intended.

The method called endotherapy is also known, which consists of introducing liquid therapeutic products through injection into the trunks of the plants, with which the direct absorption of said therapeutic products is achieved by the internal tissues of the plants, in this way enabling a more controlled application, taking advantage of all of the applied therapeutic product.

Using this endotherapy method, the influence of meteorological factors is also avoided as well as the dispersing of the therapeutic product in the surroundings of the plants to be treated, which risks affecting other plants, people or animals, which in some places, such as public parks, can be very important.

According to conventional practice, the application of the endotherapy treatment is carried out by introducing the pressurized liquid therapeutic product in a hole made in the trunk of the plant to be treated, for which reason a hole is first made in the trunk of the plant and is then plugged by a sealing element, the liquid therapeutic product being injected afterwards by means of a needle going through the sealing element of the needle.

This method is effective for preventing the dispersion of the applied therapeutic product, however, in order to obtain the best results and avoid adverse effects, it is necessary to adequately dose the amount of liquid therapeutic product and the pressure at which it is applied, these parameters needing to be adapted depending on factors, such as the type, size, age, etc., of the plants to which the treatment is applied, since with an insufficient amount of therapeutic product and/or too little application pressure, the treatment can be ineffective, while with an excess amount of therapeutic product and/or too much application pressure, the plant tissues can be damaged.

For this function of applying endotherapy treatments, equipment is known that is simple and cheap, with which the amount of liquid therapeutic product and the application pressure fundamentally depend on the judgement and experience of the worker that carries out the treatment, for which there is a high risk that the treatment may not be carried out correctly according to the characteristics of the plants to be treated.

Automatic equipment is also known that injects an amount of liquid therapeutic product at a certain pressure, according to predefined values that depend on the individual characteristics of the plants be treated, for example according to the solutions described in the patents ES 2291184 and ES 2461355. However, none of the known embodiments of this type control the injection of the liquid therapeutic product to make it vary during the injection process thereof, when necessary, in order to maintain optimal conditions for the absorption by the tissues of the plants to be treated, depending on the characteristics thereof.

### Object of the invention

According to the invention, equipment is proposed for applying endotherapy treatments in the trunks of plants, with embodiment characteristics of this equipment that enable the injection of liquid therapeutic products to be carried out in optimal conditions for absorption by the treated plant tissues.

This equipment object of the invention consists of an assembly that comprises a product-containing tank, a pumping device, a control unit and an injection element, the pumping device hydraulically connecting with the product-containing tank and in turn hydraulically and electrically with the control unit, which in turn hydraulically connects with the injection element.

The pumping device includes a hydraulic cylinder that has an inlet connected to the hydraulic connection with the product-containing tank and an outlet connected to the hydraulic connection with the control unit, the piston of said hydraulic cylinder being coupled, by means of a linear transmission, with an actuating motor, which is connected to a power supply battery, with which it also connects the electric connection with the control unit.

The control unit has command buttons and a display screen, which are connected to an electronics board with which the electric connection connects, in turn, to the pumping device and a transducer arranged in relation to a conduit between the hydraulic connection with the pumping device and the hydraulic connection with the injection element. In relation to the functional assembly, the control unit also has a trigger for activating the operations and interrupting them when necessary.

In this way, equipment is provided in which predefined data of optimal applications of liquid therapeutic products for different types of plants and conditions can be entered and stored, based on which data a therapeutic product injection program is established in each application, which determines the amount of liquid therapeutic product to be injected and the maximum injection pressure, additionally exerting constant control during the injection in order to maintain ideal pressure conditions in the receiving hole of the plant to which it is applied, such that upon reaching a maximum pressure for the absorption by the plant tissues, the injection stops automatically, until the injected amount of liquid therapeutic product is absorbed, continuing the injection once the suitable conditions for absorption by the plant are reestablished; operating in this way until the entire amount of liquid therapeutic product that corresponds to the treatment to be applied is injected.

In order to optimize the injection operating conditions, the hydraulic cylinder of the pumping device is provided with double action, with which a uniform injection is achieved, facilitating the control of the ideal pressure in the receiving hole of the plants to be treated.

The injection element, through which the liquid therapeutic product to be injected in the plants is released, incorporates an operable stop valve, which may be activated manually, through which said injection element can be plugged when the equipment is not being used, in this way avoiding loss through leakage of the liquid therapeutic product. Said injection element also incorporates an automatic valve, which closes off the passage of the product below a certain pressure.

Due to all of this, the advocated equipment comes from characteristics that make it advantageous for the function for which it is intended to be used, treating plants via endotherapy, acquiring an automated state and preferred character of use compared to the current equipment used for said function.

### Description of the drawings

Figure 1 shows a diagram of the general assembly of the equipment of the invention, according to an exemplary embodiment.

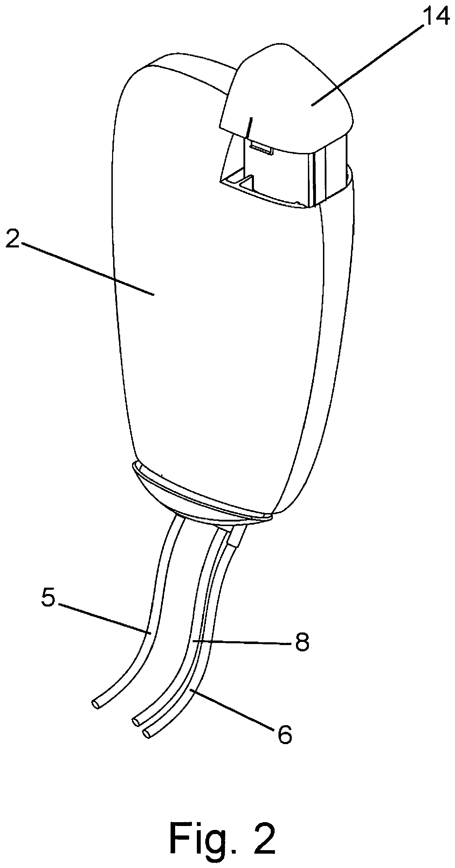

Figure 2 is a perspective view of the pumping device of the equipment, with the supporting battery carrier partially taken out.
Figure 3 is a view of the open pumping device, showing the functional assembly housed inside of the same.
Figure 4 is an enlarged perspective of the supporting battery carrier of the pumping device.

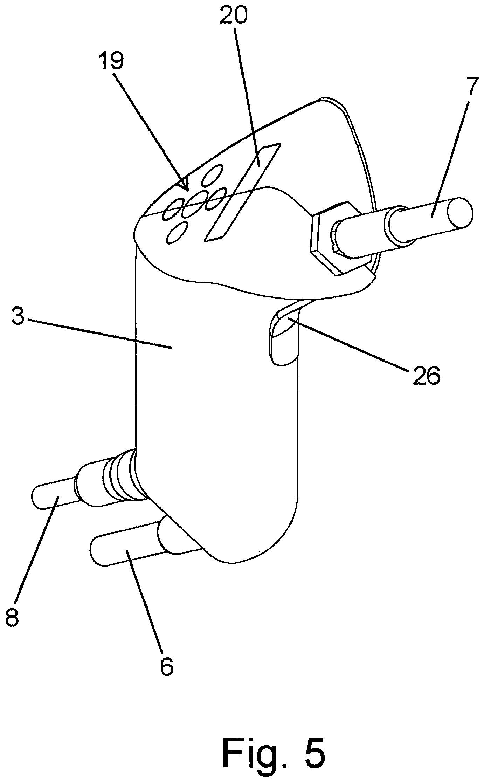

Figure 5 is a perspective of the control unit of the equipment.
Figure 6 is a view of the open control unit, showing the functional assembly housed inside of the same.

### Detailed description of the invention

The object of the invention relates to equipment for applying endotherapy treatments by injecting liquid therapeutic products in plant trunks, such as trees or palm trees, with features enabling the injection of the treatments to be carried out in optimal conditions for absorption by the tissues of the plants to be treated.

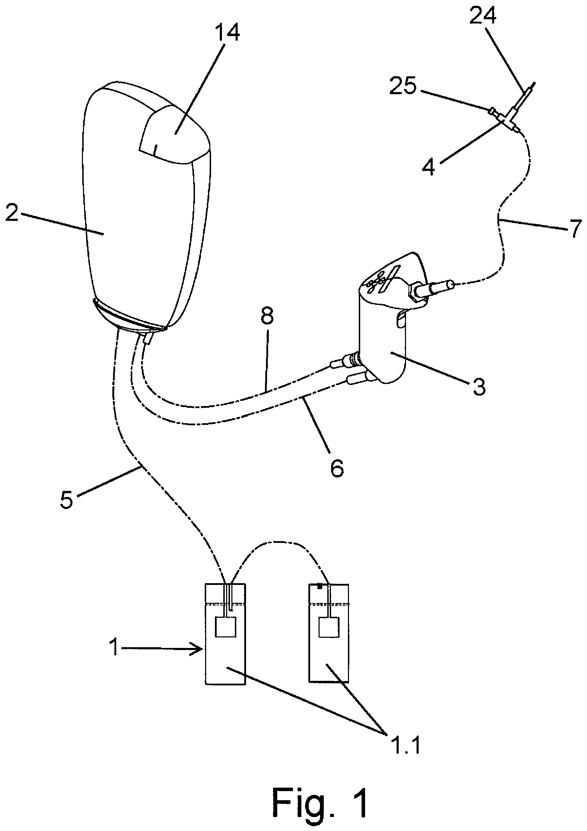

The equipment comprises a product-containing tank (1), a pumping device (2), a control unit (3) and an injection element (4); such that, as seen in figure 1, the pumping device (2) is hydraulically connected with the tank (1) by means of a tube (5) and with the control unit (3) by means of another tube (6); while the control unit (3) in turn hydraulically connects to the injection element (4) by means of a respective tube (7); while the pumping device (2) is electrically connected with the control unit (3) by means of a cable (8).

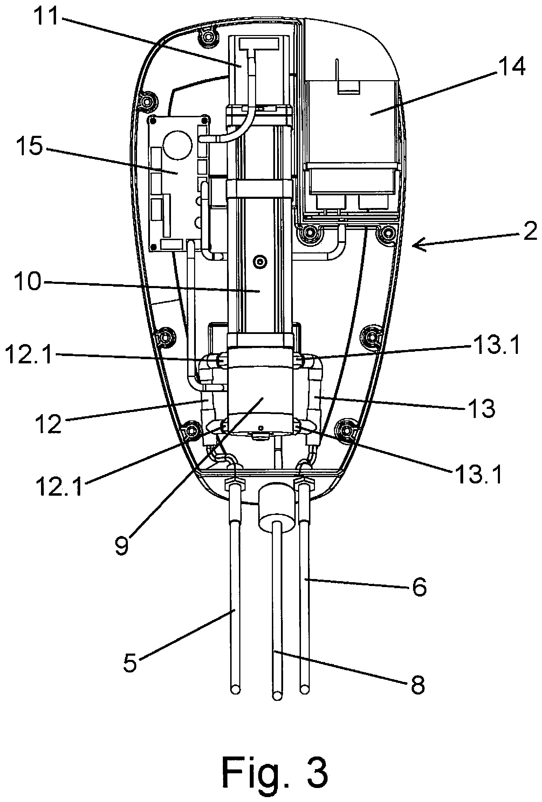

As seen in figure 3, the pumping device (2) incorporates in its interior a hydraulic cylinder (9), the piston of which is linked, by means of a linear transmission (10) with a stepper motor (11) that actuates a back-and-forth motion, said hydraulic cylinder (9) having an inlet (12) connected to the tube (5) that is hydraulically connected to the product-containing tank (1) and an outlet (13) connected to the tube (6) that is hydraulically connected to the control unit (3).

Said pumping device (2) further incorporates an electric battery that is arranged in a battery carrier (14), connecting said electric battery, through an electronics board (15), with the motor (11) and with an electric connecting cable (8) with respect to the control unit (3).

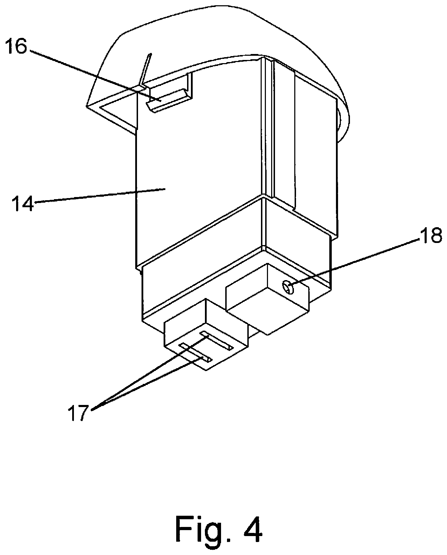

The battery carrier (14) is arranged in the pumping device (2) in a removable assembly, having operable hooks (16) in order to keep it in the assembly position and, as seen in figure 4, in relation to the housing of the battery carrier inside the same, it is provided with fittings (17) that automatically connect, with respect to the electric connection, with the electronics board (15) upon inserting said battery carrier (14) in the assembly position in the pumping device (2), and a fitting (18) in order to establish a recharging connection for the electric battery taking the battery carrier (14) out of the pumping device (2).

The control unit (3) has buttons (19) and a display screen (20) on the outside, so that the user can interact with the equipment, introducing data and operation commands, by means of the buttons (19), and see the data that are introduced and the operations that are processed on the display screen (20).

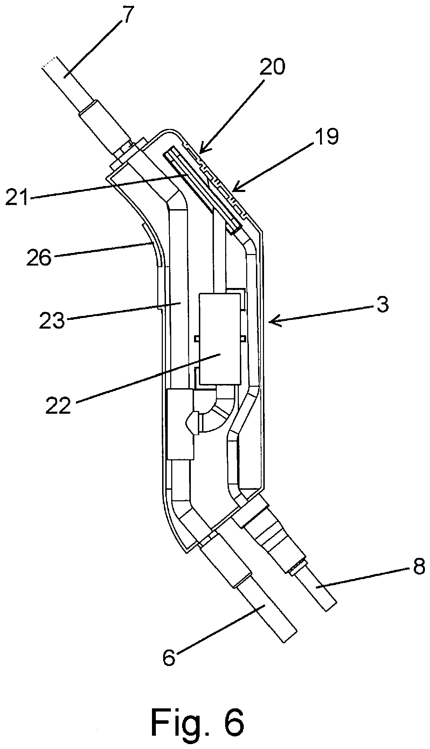

The buttons (19) and the display screen (20) are connected to an electronics board (21) arranged on the inside of the control unit (3), with which the electric connecting cable (8) is connected in turn, as seen in figure 6, with the pumping device (2) and a transducer (22) that is arranged in relation to a conduit (23) that establishes a connection through the inside of the control unit (3) between the tube (6) that hydraulically connects with the pumping device (2) and the tube (7) that hydraulically connects with the injection element (4).

As such, by means of the buttons (19), different therapeutic product injection programs can be introduced in the electronics of the equipment, depending on predetermined ideal conditions of therapeutic product amounts and injection pressures, for different kinds of plants; such that for the application the program that corresponds to the treatment to be applied is selected, by means of the button (19) itself, the equipment automatically carrying out the injection process with ideal conditions for the effectiveness of the treatment.

To carry out the application of an endotherapy treatment in a plant, a hole is made in the trunk of the plant to be treated, which is closed with a plug, for example by means of a stopper made of elastic material that is able to be pierced by a needle and close the passage of the needle by itself when it is removed.

In this way, by means of the buttons (19) of the control unit (3) of the equipment, the treatment program to be carried out is selected, and by means of the injection element (4), which has a needle (24), the stop plug of the hole made in the trunk of the plant to be treated is passed through, after which, by means of a trigger (26) that the same control unit (3) has, the equipment is activated, which by means of the hydraulic cylinder (9) takes the amount of product to be injected out of the tank (1) and sends it, through the passage formed by the tube (5), the conduit (23) and the tube (6), to the injection element (4), for injection, through the needle (24), inside the hole of the trunk of the plant to be treated.

During the injection process, the transducer (22) controls the passage of the product that is sent towards the injection element (4) to be injected, such that if in a given moment, due to the filling of the hole in the trunk of the plant to be treated, the pressure reaches an expected maximum pressure value as a limit to avoid damaging the tissues of the plant to be treated, the operations of the motor (11) are automatically stopped and, as such, the pump by means of which the hydraulic cylinder (10), until a suitable pressure is reestablished inside the hole in the trunk of the plant as part of the injected product is absorbed by the plant, at which point the motor (11) is brought back into operation in order to resume the injection. When the predetermined amount of therapeutic product for the treatment has finished being injected, the operation of the equipment automatically stops, the needle (24) being able to be extracted from the hole in the trunk of the plant to be treated, concluding in this way the application of the treatment.

When faced with any unexpected eventuality during the treatment application process, for example if the needle (24) accidentally comes out of the injection hole in the plant to be treated, the equipment operation can be manually stopped by means of the trigger (26) of the control unit (3).

In order for the injection of therapeutic products in the application of treatments on plants to be more uniform, the hydraulic cylinder (9) for the injection pumping is provided with double action, the inlet (12) and the outlet (13) thereof having, respectively, corresponding mouths (12.1) and (13.1) provided with check valves, in both ends of said hydraulic cylinder (9), such that when the piston moves in and out, product is absorbed from the tank (1) and pushed out in order to be injected.

The injection element (4) incorporates an operable valve (25), by means of which the passage of product can be closed off through said injection element (4) when the equipment is not in operational process of an endotherapy treatment, in this way avoiding losses of therapeutic product through leakage. On the inside, said injection element also has an automatic valve, which closes off the passage of the therapeutic product below a certain pressure.

According to a practical embodiment, it is anticipated that the injection equipment can be incorporated into a backpack-type harness in order to be carried by a person, in relation to which, in order to transport it more comfortably, it is anticipated that the tank (1) may be made up of two interconnected partial tanks (1.1), with which a more balanced transportation arrangement can be obtained in this embodiment for incorporating the injection equipment into a backpack-type harness.

## Claims

1. An injection equipment for endotherapy treatments in plants, comprising a product-containing tank (1), a pumping device (2), a control unit (3) and an injection element (4), with hydraulic connection between the tank (1) and the pumping device (2) between said pumping device (2) and the control unit (3) and between said control unit (3) and the injection element (4), while the pumping device (2) is further electrically connected to the control unit (3), **characterized in that** the control unit (3) incorporates a transducer (22) arranged in relation to a conduit (23) that connects through the inside of said control unit (3) the hydraulic connections of the same with the pumping device (2) and with the injection element (4), said transducer (22) being connected to the electric connection between the control unit (3) and the pumping device (2).

2. The injection equipment for endotherapy treatments in plants, according to claim 1, **characterized in that** the control unit (3) has buttons (19) and a display screen (20) on the outside, which are electrically connected to the transducer (22).

3. The injection equipment for endotherapy treatments in plants, according to claim 1, **characterized in that** the pumping device (2) has a hydraulic cylinder (9) that is connected to the hydraulic connection with the tank (1) and to the hydraulic connection with the control unit (3), the piston of said hydraulic cylinder (9) being coupled, by means of a linear transmission (10), with an actuating motor (11), which electrically connects to the transducer (22) of the control unit (3), the assembly having a power supply battery.

4. The injection equipment for endotherapy treatments in plants, according to claim 3, **characterized in that** the power supply battery of the motor (11) is housed in a battery carrier (14) that is arranged according to a removable assembly in the pumping device (2).

5. The injection equipment for endotherapy treatments in plants, according to claim 1 **characterized in that** the injection element (4) has an operable valve (25) that enables the passage of product through said injection element (4) to be closed off.

6. The injection equipment for endotherapy treatments in plants, according to claim 1, **characterized in that** the injection element (4) has an automatic valve that closes the passage of therapeutic product through said injection element (4) below a certain pressure.

7. The injection equipment for endotherapy treatments in plants, according to claim 1, **characterized in that** the control unit (3) has a trigger (26) that enables the operations to be manually activated and deactivated.

8. The injection equipment for endotherapy treatments in plants, according to claim 1, **characterized in that** the product-containing tank (1) is made up of two interconnected partial tanks (1.1).
